# EUROPEAN PATENT SPECIFICATION

(11) **EP 3 261 958 B1**
(45) Date of publication and mention of the grant of the patent: **12.12.2018**
(21) Application number: 16712497.3
(22) Date of filing: 15.02.2016
(51) Int. Cl.: B65D 85/804, B29C 65/00

(54) **CAPSULE FOR PREPARATION OF INFUSED OR SOLUBLE BEVERAGES**
KAPSEL ZUR HERSTELLUNG VON BRÜHGETRÄNKEN ODER LÖSLICHEN GETRÄNKEN
CAPSULE POUR LA PRÉPARATION DE BOISSONS INFUSÉES OU SOLUBLES

(30) Priority: 27.02.2015 IT BS20150028
(43) Date of publication of application: 03.01.2018
(73) Proprietor: Bisio Progetti S.p.a., 15121 Alessandria (IT)
(72) Inventor: TOMASI, Roberto, 15121 Alessandria (IT)
(74) Representative: Gualeni, Nadia
(86) International application number: PCT/IB2016/050798
(87) International publication number: WO 2016/135581

(56) References cited:
- WO-A1-2015/008309
- US-A1- 2010 260 896
- US-A1- 2012 100 259
- US-A1- 2014 037 803

## Description

This invention relates to a capsule for the preparation of infused or soluble beverages.

In particular, this invention relates a capsule for the packaging of concentrated products (for example in the form of powder, granules or leaves) in predetermined and disposable doses, for the extemporaneous preparation of beverages (such as tea, coffee, herbal tea, milk, chocolate , etc.) by means of the introduction, into the capsule itself, of a fluid under pressure (mostly hot water).

In the field of capsules or pods for coffee or other infusions, it is known to use automatic or semi-automatic machines equipped with a dispenser group suitable to produce an infusion through the passage of hot water under pressure through the capsule containing precisely the essence to be infused or dissolved. Examples of such known capsules are described in earlier documents US2010/0260896, WO2015/008309 and US5221028. US2014/0037803 discloses a capsule according to the preamble of claim 1.

The common operating principle of such machines provides for the piercing of the cover closing the capsule to allow the introduction of a flow of hot water under pressure by the infuser group. After obtaining the infusion of the essence contained in the capsule, the infused beverage flows out of the capsule and is directed by the machine into the cup or final container.

To prevent the pressurised fluid from passing through the substance to be infused too rapidly, without therefore spreading sufficiently inside the capsule with negative repercussions on the quality of the infused beverage, the known capsules are provided with a layer of sealing film, usually made of aluminium, placed on the bottom of the capsule in correspondence of a base provided with one or more cutting or piercing points or profiles. The increase of pressure in the capsule causes the pressurised fluid to push the aluminium layer against the points on the base until it is pierced or ruptured. Once the opening is created in the layer of sealing film, the infused beverage can flow out from a suitable opening in the base of the capsule itself.

These known capsules are rather complex from the constructive point of view, particularly as regards the realisation of the cutting and piercing points and profiles on the base. Therefore, these known capsules are rather expensive, especially as concerns the production of the related moulds.

The purpose of this invention is to provide a capsule for the preparation of infused or soluble beverages that solves the problems of the prior art.

In particular, the purpose of this invention is to provide a capsule for the preparation of infused or soluble beverages that is simple and inexpensive to manufacture compared to the known capsules, while still achieving similar performance in terms of quality of the infused beverage.

Another purpose of this invention is to provide a capsule for the preparation of infused or soluble beverages in which the opening of the capsule, to allow the infused beverage to flow out, occurs as a result of the deformation of the sealing disc, placed to cover the bottom of the capsule, due to the pressure exerted by the pressurised fluid inside it, thus avoiding recourse to any means of cutting or piercing as in the known capsules.

This purpose is achieved by a capsule for the preparation of infused or soluble beverages according to claim 1, by a method for the preparation of an infused beverage according to claim 10, and by a method for welding a sealing disc to the base of a capsule according to claim 13.

The dependent claims describe preferred embodiments of the invention.

The characteristics and advantages of a capsule for the preparation of infused or soluble beverages according to this invention will be apparent from the following description, given by way of non-limiting example, in accordance with the accompanying figures, wherein:
- Figure 1 is a perspective view from below of a capsule for the preparation of infused or soluble beverages according to this invention;
- Figure 2 is a perspective view from above of a capsule for the preparation of infused or soluble beverages according to this invention;
- Figures 3 and 3A are, respectively, a top view and a sectional view of a capsule for the preparation of infused or soluble beverages according to this invention;
- Figures 4 and 4A are, respectively, a top view and a sectional view of a capsule provided with a sealing disc on the bottom according to this invention, before infusion;
- Figures 5 and 5A are, respectively, a top view and a sectional view of a capsule provided with a sealing disc on the bottom according to this invention, after infusion;
- Figure 6 is a sectional view of a capsule for the preparation of infused or soluble beverages according to this invention, in an embodiment variant;
- Figure 7 is a sectional view of a capsule for the preparation of infused or soluble beverages according to this invention, in a further embodiment variant;
- Figure 8 is a sectional view of a capsule for the preparation of infused or soluble beverages according to this invention, in a yet further embodiment variant;
- Figure 9 is a perspective view of a welder for welding the sealing disc on the bottom of the capsule according to this invention;
- Figures 10 and 10A are, respectively, a sectional view and a detail of the welder of Figure 9, in an embodiment variant;
- Figures 11 and 11A are, respectively, a sectional view and a detail of the welder of Figure 10, in a step of welding the sealing disc on the bottom of the capsule;
- Figure 11B shows a detail of the sealing disc welded on the bottom of the capsule, in an embodiment variant;
- Figures 12 and 12A are, respectively, a sectional view and a detail of the welder of Figure 9, in a step of welding the sealing disc on the bottom of the capsule, in a further embodiment variant;
- Figure 12B' shows a detail of the sealing disc welded on the bottom of the capsule, in a further embodiment variant.
- Figures 13 and 13A are, respectively, a sectional view and a detail of the welder of Figure 9, in a step of welding the sealing disc on the bottom of the capsule, in a yet further embodiment variant;
- Figure 14 is a top view of two possible embodiment variants of the capsule provided with radial grooves inside the welding area of the rim of the sealing disc;
- Figure 15 is a top view of an embodiment variant of the capsule provided with radial grooves outside the welding area of the rim of the sealing disc;
- Figures 15B and 15C are, respectively, a top view and a detail in section of the capsule of Figure 15A with a sealing disc welded on the bottom.

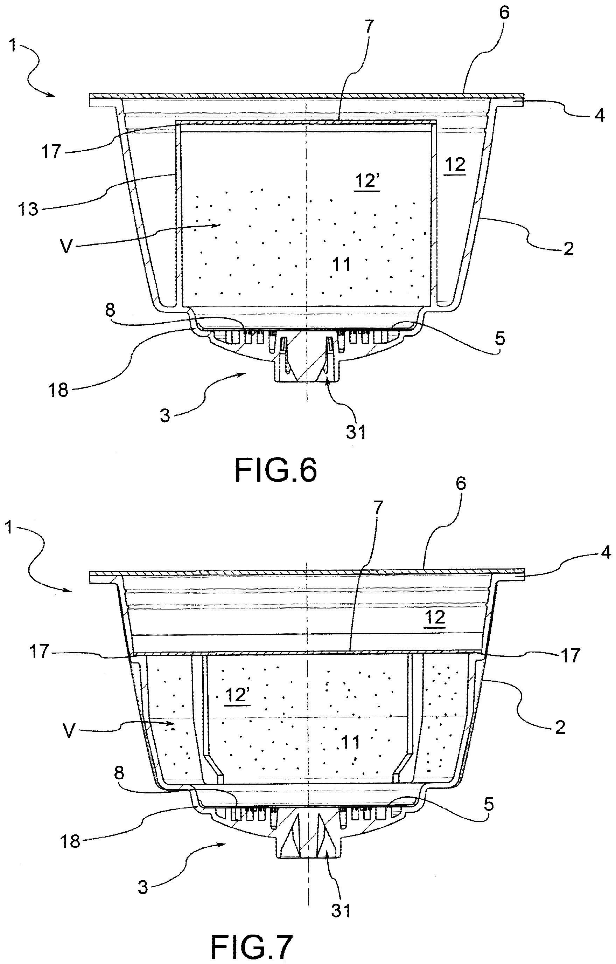

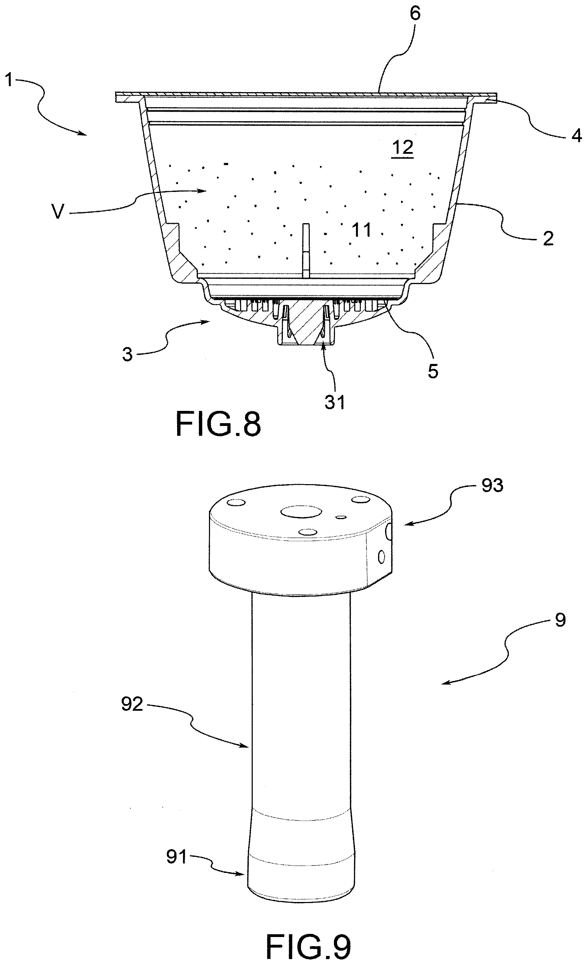

The accompanying figures, and in particular Figures 6 and 8, show a capsule for the preparation of infused or soluble beverages indicated with the reference number 1.

The capsule 1 comprises a body or cup 2 suitable to define an inner volume V for containing at least one substance 11 to be infused or dissolved, typically in powder or granular form.

The cup 2 is made of plastic material, preferably injection moulded or thermoformed. For example, the cup is made of polypropylene (PP), polyethylene (PE), polybutylene terephthalate (PBT) or polyethylene terephthalate (PET).

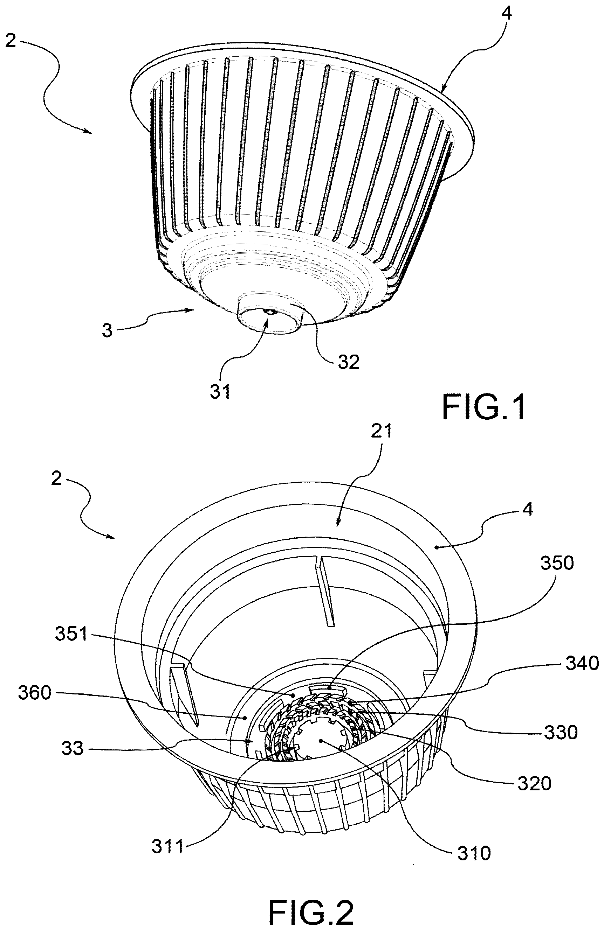

As shown in Figures 1 and 2, the cup 2 is provided, on one side, with a bottom 3 and, on the opposite side, an entrance opening 21 defined by an edge 4 protruding outwardly.

The cup 2 is provided, in correspondence of the bottom 3, with an exit opening 31, defined by a nozzle 32, suitable to allow the outflow of the infused beverage.

The cup 2 is provided, in correspondence of the bottom 3, with a base 33 provided with a plurality of reliefs 310,320,330,340,350,360, protruding vertically with respect to the base 33 itself. The reliefs are protruding towards the inside of the cup 2, in the direction of the cover 6. Advantageously, the upper surface of the reliefs 310,320,330,340,350,360 is substantially flat and free of cutting, puncturing or lacerating elements. Advantageously, on the upper surface of at least some of the reliefs 310,320,330,340,360 is fixed, by gluing or welding, a sealing disc 5.

As shown in Figures 6, 7 and 8, the disc 5 is positioned between the inner volume V and the reliefs 310,320,330,340,350,360.

The disc 5 is positioned between the substance 11 to be infused or dissolved, and the base 33, and in particular below the substance 11 and above the base 33.

The disc 5 closes the containment volume V of the substance, resting on the reliefs 310,320,330,340,350,360 that form the base 33.

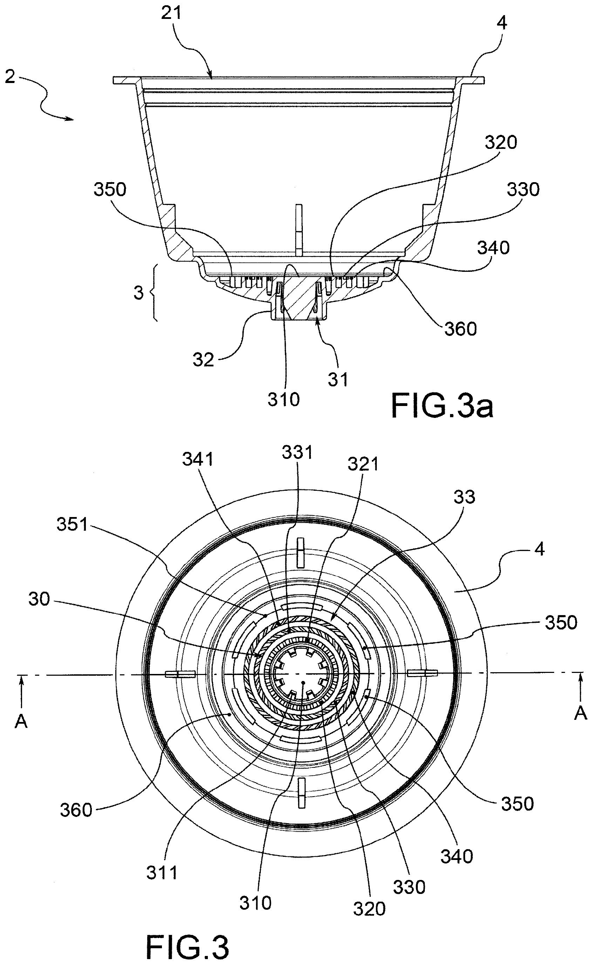

As shown in Figures 3 and 3A, the base 33 comprises a central portion 310, defined by a first relief, covering the exit opening 31 of the nozzle 32. The central portion 310 is provided with at least one connection opening 311 between the inside of the cup 2 and the exit opening 31, precisely to allow the outflow of the infused beverage to the outside of the capsule 1. Preferably, the central portion 310 comprises a plurality of connection openings 311.

The base 33 comprises at least one labyrinth portion 320,330,340, defined by a further relief.

The labyrinth portion 320,330,340 is of substantially circular shape, arranged concentrically with respect to the nozzle 32 (and to the central portion 310) .

The labyrinth portion 320,330,340 is provided with a plurality of grooves 321,331,341. These grooves 321,331,341, preferably diagonal, allow the outflow of the infused beverage to the outside of the capsule 1.

The base 33 thus comprises a labyrinth 30, defined by at least two labyrinth portions 320,330,340. In the embodiment variant shown in Figure 3, the labyrinth 30 is defined by a first labyrinth portion 320, by a second labyrinth portion 330 and a third portion labyrinth 340 arranged concentrically with respect to the nozzle 32 (and to the central portion 310). Advantageously, the labyrinth 30 is suitable to prevent, by effect of capillarity, the passage of the infused beverage to the nozzle 32 when the pressure inside the capsule 1 drops below a threshold value, or ceases altogether when the capsule 1 is disengaged from the infusing group of the machine, to avoid dripping of the beverage itself. Advantageously, especially in the case of a capsule for the preparation of soluble beverages, the labyrinth 30 is suitable to reduce the output speed of the infused beverage. The outflow of the infused liquid contained in the capsule 1 occurs with regularity, even in the presence of a high internal pressure, due to the resistance offered by the narrow passages formed by the plurality of grooves 321,331,341.

The base 33 comprises an outer edge 360, defined by a further relief, on which a sealing disc 5 is fixed in a partially releasable manner by gluing or welding.

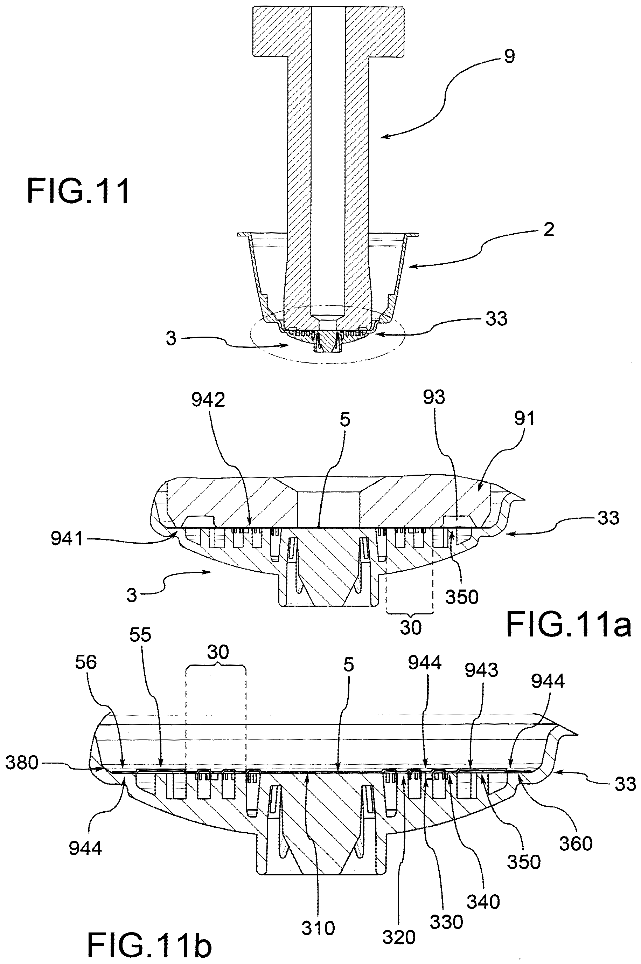

In an embodiment variant, shown in Figure 11B, the relief 360 that defines the edge 360 has substantially the same vertical extension of the other reliefs 310,320,330,340 that form the base 33.

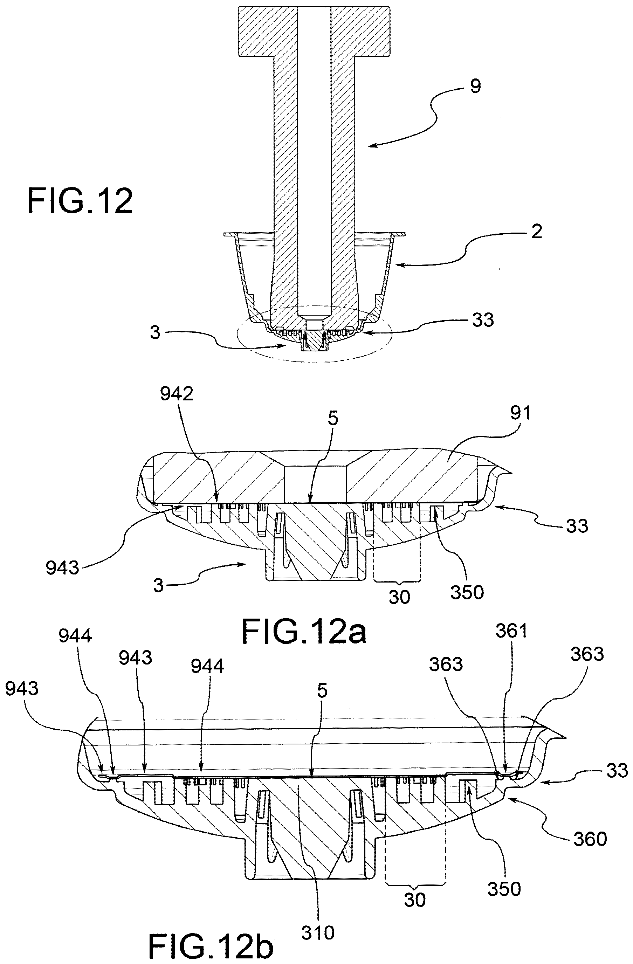

In a further embodiment variant, shown in Figure 12B, the edge 360 comprises at least one raised portion 361 that defines, for example, a central raised ring having substantially the same vertical extension of the other reliefs 310,330,340 that form the base 33. The edge 360 comprises at least one recessed portion 363 having a lesser vertical extension with respect to the other reliefs 310,320,330,340 that form the base 33, and the raised portion 361. Advantageously, the presence of a recessed area 363 external to the raised area 361, in correspondence of which occurs the welding of the disc 5, allows channelling the pressurised liquid under the edge 51 so as to facilitate the detachment of the disc 5 from base 33. Advantageously, the presence of a recessed area 363 internal to the raised area 361, in correspondence of which occurs the welding of the disc 5, facilitates, once obtained the opening of the capsule, the outflow of the infused beverage.

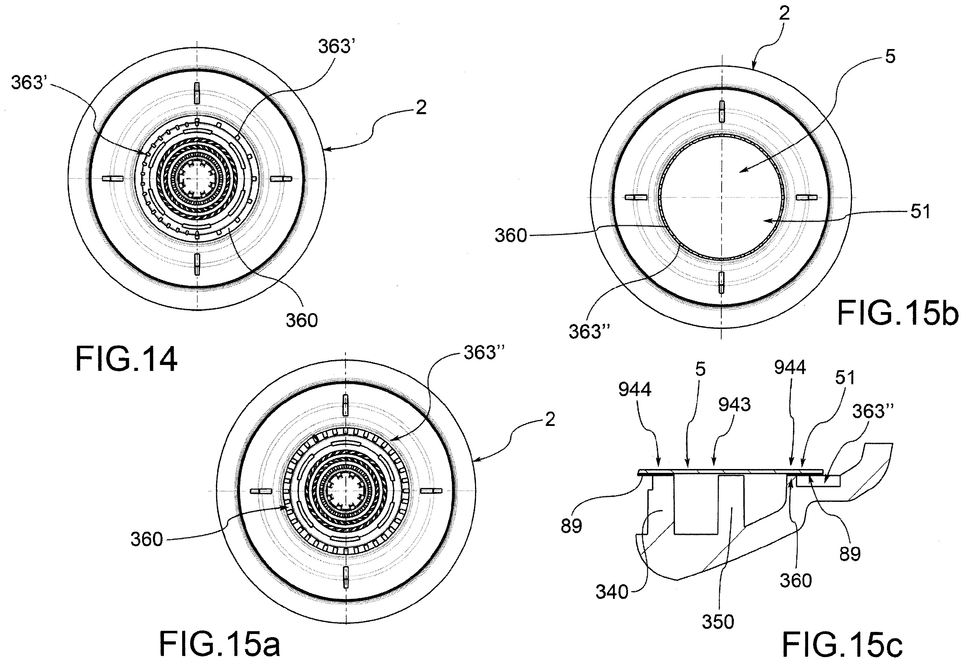

As shown in Figure 14, also in the variant in which the reliefs 310,320,330,340,350,360 have substantially the same vertical extension, recessed areas 363 can be prepared, for example in the form of radial grooves 363', 363". Preferably, the radial grooves 363',363'' are homogeneously distributed in correspondence of the edge 360 of the base 33 of the bottom of the capsule. In particular, Figures 14 and 15A show several realisation examples of the radial grooves.

For example, Figure 14 shows a capsule provided with a plurality of radial grooves 363' on the edge 360, in particular internally with respect to the area where the edge 51 of the disc 5 will be welded, so as to facilitate the outflow of the infused beverage once the opening of the capsule is obtained.

The left portion of Figure 14, shows an example of a capsule provided with a high number of radial grooves 363' of reduced size; the right portion of figure 14, shows an example of a capsule provided with a lower number of radial grooves 363' of larger size.

For example, Figure 15 shows a capsule provided with a plurality of radial grooves 363" on the edge 360, in particular externally with respect to the area where the edge 51 of the disc 5 will be welded, so as to channel the pressurised liquid under the disc 5 to facilitate its detachment. As shown in Figure 15C, the welding of the disc 5 takes place in correspondence of a reduced portion of the edge 360, while the groove 363" allows channelling the pressurised liquid under the edge 51 of the disc 5.

The base 33 comprises a plurality of sectors 350, defined by further reliefs, arranged between the labyrinth 30 and the edge 360.

The circular sectors 350, substantially in the shape of an arc of circumference, are circumferentially arranged homogeneously with respect to the nozzle 32 (and to the central portion 310). Advantageously, the upper surface of the sectors 350 is substantially flat and free of cutting, puncturing or lacerating elements. Advantageously, a sealing disc 5 is supported on the upper surface of the sectors 350.

In an embodiment variant, shown in Figure 11B, the reliefs 350 that defines the sectors 350 have substantially the same vertical extension of the other reliefs 310,320,330,340 that form the base 33.

In a further embodiment variant, shown in Figure 12B, the reliefs 350 that defines the sectors 350 have a lesser vertical extension, which is to say they are lowered, with respect to the other reliefs 310,320,330,340 that form the base 33.

The sectors define a plurality of recesses 351, compartments or spaces that allow the outflow of the infused beverage to the outside of the capsule 1. In particular, a recess 351 is defined between a pair of adjacent sectors 350. In the embodiment variant of Figure 3, the base 33 includes six sectors 350 and six recesses 351. Advantageously, the recess 351 defines a space suitable to accommodate, without obstructing it, the deformation of at least a portion of a sealing disc 5 when the pressure exerted by the fluid inside the capsule 1 reaches a certain opening threshold level.

Preferably, the circumferential extension of a sector 350 is greater than circumferential extension of a recess 351. This constructive choice allows the disc 5 to be freely deformable inside the recess 351, so as to form the crease 52 to open the passage P for the outflow of the infused beverage, and to be simultaneously supported by the sector 350, in such a way as to ensure an adequate width of the passage P for the proper and smooth outflow of the infused beverage.

As shown in Figures 6 to 8, the capsule 1 for the preparation of infused or soluble beverages, comprises a cover 6 fixed, by gluing or welding, in correspondence of the edge 4, suitable to seal the cup 2 on the top.

Preferably, the cover 6 is an aluminium film, or a composite plastic/aluminium material or a single- or multi-layer plastic.

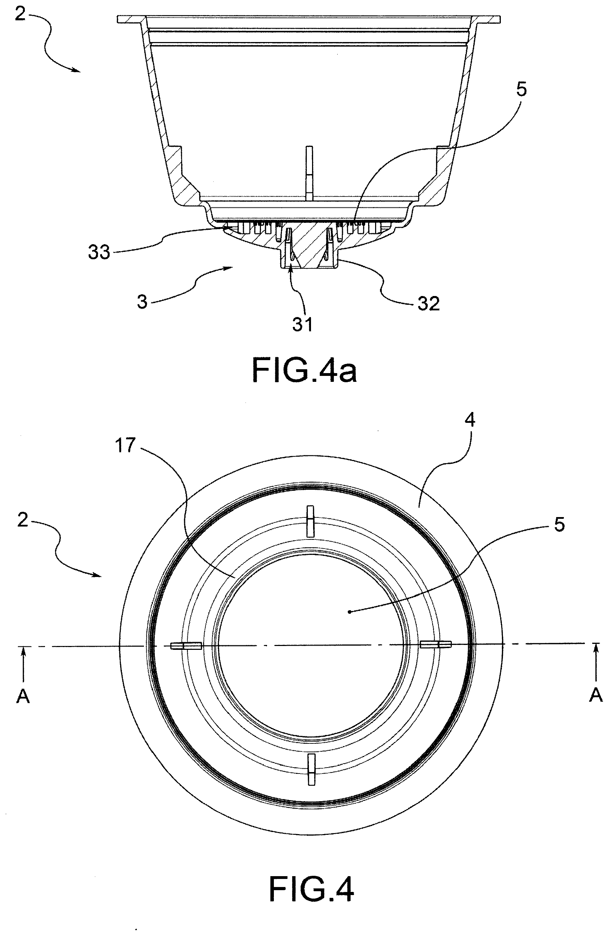

As shown in Figures 4 and 4A, the capsule 1 for the preparation of infused or soluble beverages, comprises a sealing disc 5 fixed inside the cup 2 in correspondence of the bottom 3, suitable to seal the cup 2 on the bottom.

The capsule 1 is thus provided with a closed chamber 12, defined by the cover 6 on the top and by the disc 5 on the bottom, inside which is contained the substance 11 to be infused or dissolved.

The presence of a hermetically closed chamber 12 is important for the good maintenance and preservation of the substance 11. The capsule 1 provided with a hermetically closed chamber 12 allows maintaining over time the organoleptic properties of the substance 11 to be infused or dissolve, and ensures a high quality of the infused beverage.

Preferably, the disc 5 is an aluminium film, or a composite plastic/aluminium material or a single- or multi-layer plastic.

Preferably, the disc 5 is a film with a thickness of at least 25µ.

Preferably, the disc 5 is a film with a thickness between 25µ and 45µ, still more preferably between 30µ and 40µ.

Preferably, the disc 5 is a film of strong aluminium, preferably with a thickness of 30µ.

This technical solution allows the disc 5 to be deformed due to the increase of pressure inside the capsule 1, without tearing or breaking.

The disc 5 is welded or glued in correspondence of the base 33 of the cup 2 in a manner at least partially releasable. Preferably, the disc 5 is welded or glued on the outer edge 360 in a releasable manner.

Preferably, the disc 5 is welded through the use of a sealing lacquer 89 having a low or bland level of adhesion, or glued by means of a glue with a low or bland level of adhesion, in such a way as to allow detachment or unsticking from the base 33 due to the increase of pressure inside the capsule 1.

Preferably, the lacquer ensures a lower detachment force than that of standard lacquers. For example, the detachment force measured after welding the disc 5 to the base 33 with a temperature of 240°C for a time of 0.3s and a force of 6bar, much lower than 10N/15mm on a flat surface.

The disc 5 is welded or glued in correspondence of the bottom of the cup 2 and, in particular, is welded at least partially on the base 33. The disc 5 is welded or glued on the upper surface of at least some of the reliefs 310,320,330,340,360.

The disc 5 is welded or glued to the outer edge 360 and on at least one of the labyrinth portions 320,330,340. Preferably, the disc 5 is welded or glued on the labyrinth 30, which is to say on all the labyrinth portions 320,330,340 that define the labyrinth 30 itself.

Preferably, the disc 5 is also glued or welded on the central portion 310.

The disc 5 is only supported, without being fixed, on at least some of the sectors 350. Preferably, the disc 5 is only supported on all the sectors 350. Advantageously, the sector 350 defines a support and sliding surface of at least a portion of the disk 5 during its deformation by the pressurised fluid in the capsule 1 when a certain opening pressure is reached.

This invention also relates to a method of a welding a sealing disc 5 to the base 33 of a capsule 1 according to this invention, wherein the disc 5 is welded in a releasable manner to an outside edge 360 of the base 33 using a welding lacquer 89 with a low level of adhesion. In particular, the disc 5 is also welded on labyrinth portions 320,330,340 of the base 33 that define the labyrinth 30.

Preferably, the disc 5 is welded using a special welding tool 9, shown in Figure 9.

The welding tool 9 comprises a body 92 provided on one side with a head 93, suitable to allow the gripping and handling of the tool 9, and one the opposite side with a welding base 91.

In the embodiment variant shown in Figures 12 and 12A, preferably usable for welding a disc 5 on a base 33 in which the sectors 350 are recessed and the edge 360 comprises at least one recessed portion 363 with respect to the other reliefs 310,320,330,340 that form the base 33, the base 91 of the welder 9 is provided with a welding profile 94 substantially flat.

In this embodiment variant, as shown in Figure 12B, the disc 5 is welded in correspondence of the labyrinth 30, preferably also of the central portion 310, and at least partially in correspondence of the edge 360, in particular in correspondence of the raised portion 361.

In this embodiment variant, is formed at least one welding area 944 (labyrinth 30, preferably the central portion 310, the raised portion 361) and at least one free area 943 (reliefs 350, recessed portion 363) in which no welding takes place.

In particular, with regard to the edge 360, the sealing area 944, corresponding to only the raised portion 361, is of reduced width or in any case less with respect to the total width of the edge 360 of the base 33. Advantageously, the presence of a welding area of reduced width in correspondence of the edge 360 facilitates the detachment of the disc 5 due to the increase of pressure inside the capsule 1.

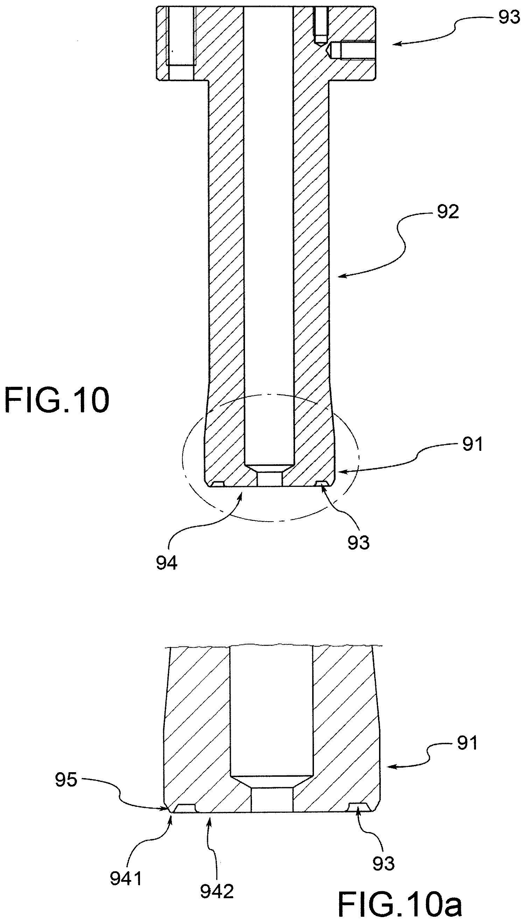

In the embodiment variants shown in Figures 10 to 11A and 13 and 13A, preferably usable for the welding of a disc 5 on a base 33 in which the reliefs 310,320,330,340,350,360 have substantially the same vertical extension, the base 91 is provided with a welding profile 94 suitable to weld the disc 5 only in correspondence of some portions of the base 33.

As shown in Figures 11, 11A and 11B, the welding profile 94 comprises a central portion 942 suitable to weld the disc 5 in correspondence of the labyrinth 30, preferably also of the central portion 310, and of a contour portion 941 suitable to weld at least partially the disc 5 in correspondence of the edge 360.

The welding profile 94 is provided, between the central portion 942 and the contour portion 941, with a channel 93 suitable to define a free area 943 in which no welding takes place.

Preferably, the base 91 being, of the tool 9 being substantially cylindrical, the channel 93 is substantially circular and concentric with respect to the base 91.

The central portion 942 of the welding profile 94 is substantially flat and defines a welding area 944 of the same width as the labyrinth 30, and preferably also of the central portion 310, of the base 33.

The contour portion 941 of the welding profile 94 is defined by a tooth 95 that defines a welding area 944 of reduced width or in any case less than the width of the edge 360 of the base 33.

Advantageously, the presence of a welding area of reduced width in correspondence of the edge 360 of the base 33 facilitates the detachment of the disc 33 due to the increase of pressure inside the capsule 1.

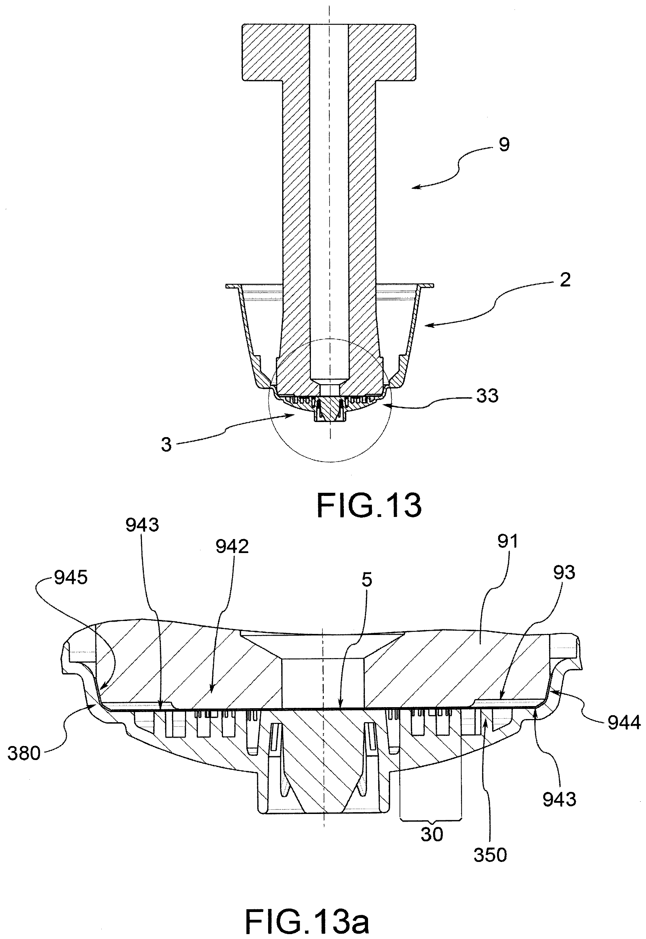

In the embodiment variant shown in Figures 13 and 13A, the disc 5 is welded at least partially in correspondence of walls 380 inclined or vertical.

In this variant, the welding profile 94 comprises a central portion 942 suitable to weld the disc 5 in correspondence of the labyrinth 30, preferably also of the central portion 310, and of a lateral portion 941 suitable to weld at least partially the disc 5 in correspondence of the walls 380.

The welding profile 94 is provided, between the central portion 942 and the lateral portion 945, with a channel 93 suitable to define a free area 943 in which no welding takes place. In this variant, the channel 93 extends to the lateral portion 945.

This invention also relates to a welding tool 9 for welding a sealing disc 5 to the base 33 of a capsule 1 according to this invention, provided with a welding base 91 with a welding profile 94 comprising a central portion 942 and a contour portion 941 suitable to make a weld, and a channel 93, provided between the central portion 942 and the contour portion 941, suitable to define a free area 943 in which there is no welding.

As shown in Figures 6 to 8, the capsule 1 can be realised in various versions.

Figures 6 and 7 show a capsule for the preparation of infused beverages, in particular coffee.

Preferably, in such embodiment variants, the capsule 1 for coffee also comprises a filter 8 welded or glued under the substance 11 on suitable vertical abutments 18 provided inside the cup 2. Preferably, the filter 8 is welded or glued in correspondence of the inner walls of the cup 2, just above the bottom 3. In particular, the filter 8 is welded or glued above the disc 5. The presence of the filter 8, preferably made of paper, fabric or non-woven fabric, below the substance 11, and in particular of the coffee powder, allows filtering the infused liquid before it flows out from the capsule 1, in this way preventing coffee powder residues from remaining in the infused beverage and impairing its quality.

Preferably, in these embodiment variants, the capsule 1 for coffee also comprises a permeable or micro-perforated film 7, welded or glued above the substance 11 on special horizontal abutments 17 provided inside the cup 2.

Inside the chamber 12, the film 7 defines, together with the disc 5, a sub-chamber 12' within which the substance 11 to be infused is effectively contained. The presence of this film 7, which allows the passage of the pressurised fluid but not the passage of the substance 11, prevents the dispersion of the coffee powder during the infusion step, improving the quality of the infused beverage.

With particular reference to the embodiment variant of Figure 6, which shows a capsule 1 for the preparation of infused coffee, the cup 2 comprises, inside a dividing wall 13, preferably circular, suitable to define the lateral walls of the sub-chamber 12' within which the substance 11 to be infused is effectively contained. In this embodiment variant, the film 7 is fixed in correspondence of the upper edge of the dividing wall 13, an edge that in this case represents the horizontal abutment 17 for gluing or welding.

The embodiment variant of Figure 8 shows a capsule for the preparation of soluble beverages, such as for example tea, chocolate or milk. Preferably, in this embodiment variant, the capsule 1 for soluble substances comprises the cover 6 and the sealing disc 5, and is without filter 8 and permeable or micro-perforated film 7.

The capsule 1, in its various embodiment variants, can be used for the extemporaneous preparation of beverages (such as tea, coffee, herbal tea, milk, chocolate, etc.) using automatic or semi-automatic machines equipped with a dispenser group suitable to produce an infusion through the passage of hot water under pressure through the capsule 1.

So, in use, the capsule 1 is inserted in a suitable seat provided in the machine. The machine pierces the cover 6, placed to close the capsule 1, and inserts, inside the chamber 12,12' in which the substance 11 is contained, a pressurised fluid (mostly hot water).

The presence of the disc 5 to closure of the bottom 3 of the capsule 1 allows the pressurised fluid to remain, for a certain interval of time, in contact with the substance 11 to be infused or dissolved, so as to ensure obtaining an optimum infused beverage. The pressure exerted by the fluid inside the capsule 1 rises until reaching a certain threshold level, or opening pressure (for example comprised between 4 and 8 bar), which pushes on the disc 5 determining the opening of the capsule 1. At this point the infused beverage can flow out through the exit opening 31 and be directed, via the nozzle 32, into the cup or final container.

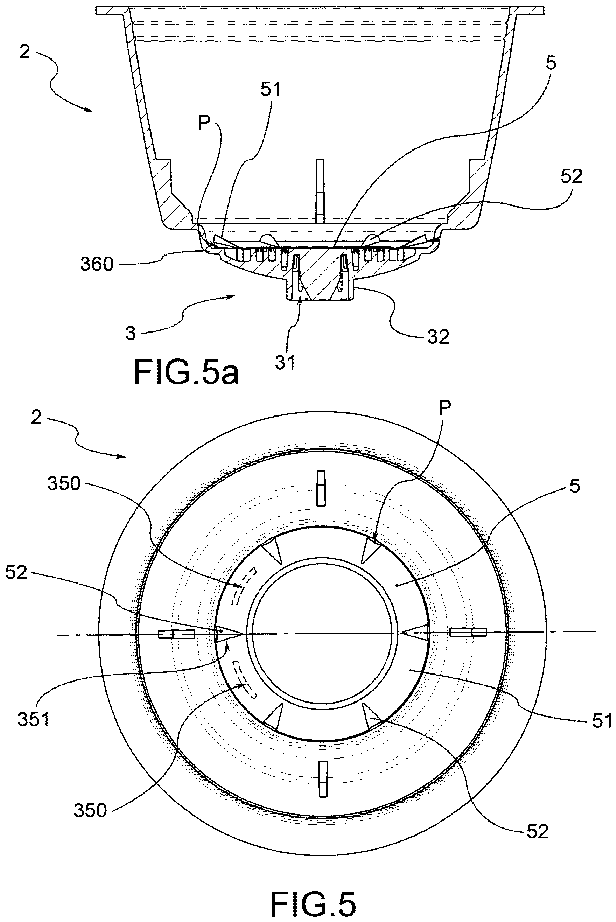

In particular, as shown in Figures 5 and 5A, the opening of the capsule 1 is determined by the deformation, at least partial, of the disc 5.

Due to the increase of pressure inside the capsule 1, the disc 5 becomes slightly convex, which is to say the edge 51 is slightly raised with respect to the edge 360 of the base 33.

Due to the increase of pressure inside the capsule 1, the edge 51 of the disc 5 is detached or unstuck, at least partially, preferably completely, from the base 33. The unsticking occurs at least in correspondence of the edge 51 of the disc 5 and the edge 360 of the base 33. This unsticking obviates the sealing effect previously provided by the sealing disc 5.

Always due to the increase of pressure inside the capsule 1, the edge 51 of the disc 5 is deformed with a certain undulation and forms a crease 52, preferably a plurality of creases 52.

The deformation of the disc 5, and in particular the crease 52, determines a separation of the disc 5 from the base 33, at least in correspondence of the edge 360, such as to allow the opening of a passage P for the outflow of the infused liquid.

In particular, the edge 51 of the disc 5 forms a crease 52 in correspondence of at least one recess 351. Preferably, the edge 51 of the disc 5 forms a crease 52 in correspondence of each recess 351.

Advantageously, the disc 5, being supported only on the upper surface of the sectors 350, without being welded or glued on them, can freely slide on the sectors 350 during the deformation due to the increase of pressure inside the capsule 1. Moreover, the presence of the recesses 351 allows accommodating, without obstructing it, the deformation of the disc 5 due to the increase of pressure inside the capsule 1. Therefore, precisely in correspondence of the recesses 351, the creases 52 are formed.

This technical solution allows the disc 5 to be deformed without tearing or breaking.

In the capsule 1 according to this invention, the exit passage P for the infused beverage, between the chamber 12, 12' and the nozzle 32, is created spontaneously by just the increase in pressure exerted by the pressurised fluid in the capsule 1, without the need for means of piercing or tearing of the disc, points or cutting profiles.

This invention also relates to a method for preparing an infused beverage using a capsule 1 according to this invention, wherein the opening to allow the outflow of the infused beverage is determined the detachment or unsticking, at least partial, of the disc 5 from the base 33 and by the subsequent deformation, at least partial, of the disc 5 itself.

In particular, the unsticking of the disc 5 takes place in correspondence of the edge 360 of the base 33 so as to obviate the sealing effect previously provided by the disc 5. The deformation of the disc 5 takes place on the 51 of the disc 5 which forms, at least at a recess 351, a crease 52 suitable to permit the release of the infused beverage.

A capsule according to this invention is usable for the packaging of concentrated products (in the form of powder, granules or leaves) in predetermined and disposable doses, for the extemporaneous preparation of beverages such as tea in leaves or soluble, coffee in powder or instant coffee, herbal tea, milk, chocolate, or other dehydrated, water-soluble products.

Innovatively, a capsule for the preparation of infused or soluble beverages according to this invention is of simple construction and, in any case, able to ensure high performance in terms of quality of the infused beverage.

Advantageously, a capsule for the preparation of infused or soluble beverages according to this invention allows maintaining over time the organoleptic properties of the substance contained inside it and thus ensures an excellent quality of the infused beverage.

Advantageously, in a capsule for the preparation of infused or soluble beverages according to this invention, the pressurised fluid passes through the substance to be infused in an optimal way with possible effects on the quality of the infused beverage.

Advantageously, in a capsule for the preparation of infused or soluble beverages according to this invention, the opening, to allow the infused beverage to flow out, occurs as a result of the deformation of the sealing disc, placed to cover the bottom, due to the pressure exerted by the pressurised fluid inside it, thus avoiding recourse to any means of cutting or piercing.

Advantageously, in a capsule for the preparation of infused or soluble beverages according to this invention, the infused beverage is never in contact with parts or elements of the machine used for the preparation of the beverage itself, without risks of alteration of the taste in the case of preparation of different types of beverages.

It is clear that one skilled in the art may make changes to the capsule for the preparation of infused or soluble beverages described above, all contained within the scope of protection defined by the following claims.

## Claims

1. Capsule (1) for the preparation of infused or soluble beverages, comprising:
- a cup (2) suitable to define an inner volume (V) for the containment of at least one substance (11) to be infused or dissolved, said cup (2) being closed above by a cover (6), the cup (2) being further provided with a bottom (3) provided with an opening (31) suitable to permit the release of the infused beverage, and a base (33) provided with a plurality of reliefs (310, 320, 330, 340, 350, 360) having an upper surface devoid of cutting or puncture elements,
wherein the capsule (1) comprises a disc (5), placed inside the cup (2), **characterised in that** the disc (5) is suitable to seal the capsule (1) underneath, welded or glued at least partially at the base (33), in a partially releasable manner so as to be at least partially detached or unstuck as a result of an increase of pressure of a fluid inside the capsule (1), and **in that** the opening of the capsule (1) for the release of the infused beverage occurs as a result of the deformation of the disc (5) by the pressure exerted by the fluid inside the capsule (1).

2. Capsule (1) according to claim 1, wherein the disc (5) is attached in a partially releasable manner on an outer edge (360) defined by one of the reliefs, or on a side wall (380) just above the base (33), using a lacquer (89) having a low or bland level of adhesion.

3. Capsule (1) according to claim 2, comprising a plurality of radial grooves (363', 363") evenly distributed at the edge (360) of the base (33).

4. Capsule (1) according to any of the previous claims, wherein some of the reliefs define a plurality of sectors (350) on the upper surface of which rests the disc (5).

5. Capsule (1) according to claim 4, wherein the sectors (350) define a plurality of recesses (351) suitable to house, without obstructing it, the deformation of the disc (5) when the pressure exerted by the fluid inside the capsule (1) reaches the opening threshold.

6. Capsule (1) according to any of the previous claims, wherein at least one of the reliefs defines a labyrinth portion (320, 330, 340) provided with a plurality of grooves (321, 331, 341) for the release of the infused beverage, and wherein the base (33) comprises a labyrinth (30), defined by at least two labyrinth portions (320, 330, 340), on which the disc (5) is fixed.

7. Capsule (1) according to any of the previous claims, wherein the disc (5) is a film of aluminium or plastic/aluminium composite or single layer or multilayered plastic and has a thickness of between 25 µ and 45 µ.

8. Capsule (1) according to any of the previous claims, wherein the cup (2) comprises, internally, a dividing wall (13) suitable to define a sub-chamber (12') for the containment of the substance (11) to be infused.

9. Capsule (1) according to any of the previous claims, wherein the cover (6), fixed on an edge (4), is suitable to close an entrance opening (21) of the capsule (1) so as to define a chamber (12) hermetically closed above by the cover (6) and underneath by the disc (5) containing the substance (11) to be infused or dissolved.

10. Method of preparing an infused beverage from a capsule (1) according to claim 9, in which a pressurised fluid is inserted, **characterised in that** when the pressure exerted by the fluid inside the chamber (12, 12') reaches a certain threshold level, the opening of the capsule (1) to allow the release of the infused beverage is determined by the at least partial detachment or unsticking of the disc (5) from the base (33) and by the at least partial deformation of said disc (5).

11. Method of preparing an infused beverage, according to claim 10, wherein the unsticking of the disc (5) takes place at an outer edge (360) of the base (33) or a side wall (380) above the base (33) so as to obviate the sealing effect previously guaranteed by the disc (5).

12. Method of preparing an infused beverage, according to claim 10 or 11, wherein the deformation of the disc (5) takes place on an edge (51) of the disc (5) which forms, at least at a recess (351), a crease (52) suitable to permit the release of the infused beverage.

13. Method of welding a sealing disc (5) to the base (33) of a capsule (1) according to any of the claims from 1 to 9, wherein the disc (5) is welded at least partially in a releasable manner to an outer edge (360) of the base (33) or to a side wall (380) above the base (33) using a welding lacquer (89) with a low level of adhesion.

14. Welding method according to claim 13, in which the disc (5) is also welded on labyrinth portions (320, 330, 340) of the base (33) which define a labyrinth (30).

## Patentansprüche

1. Kapsel für die Zubereitung von Brühgetränken oder löslichen Getränken, die umfasst:
- einen Becher (2), der geeignet ist, ein Innenvolumen (V) für den Einschluss wenigstens einer Substanz (11), die aufgebrüht oder gelöst werden soll, zu definieren, wobei der Becher (2) oben durch einen Deckel (6) geschlossen ist, wobei der Becher (2) ferner mit einem Boden (3) versehen ist, der mit einer Öffnung (31), die geeignet ist, um die Freigabe des Brühgetränks zuzulassen, und einer Basis (33) versehen ist, die mit einer Vielzahl von Reliefs (310, 320, 330, 340, 350, 360) bereitgestellt ist, die eine obere Fläche haben, die frei von Schneid- oder Durchstoßelementen ist,
wobei die Kapsel (1) eine Scheibe (5) umfasst, die im Inneren des Bechers (2) angeordnet ist,
**dadurch gekennzeichnet, dass** die Scheibe (5) geeignet ist, um die Kapsel (1) darunter, die wenigstens teilweise an die Basis (33) geschweißt oder geklebt ist, in einer teilweise lösbaren Weise abzudichten, um als ein Ergebnis einer Druckzunahme eines Fluids im Inneren der Kapsel (1) wenigstens teilweise entfernt oder gelöst zu werden,
und dass die Öffnung der Kapsel (1) für die Freigabe des Brühgetränks als ein Ergebnis der Verformung der Scheibe (5) durch den Druck, der durch das Fluid im Inneren der Kapsel (1) ausgeübt wird, auftritt.

2. Kapsel (1) nach Anspruch 1, wobei die Scheibe (5) in einer teilweise lösbaren Weise auf einem Außenrand (360), der durch eines der Reliefs definiert wird, oder auf einer Seitenwand (380) direkt über der Basis (33) unter Verwendung eines Lacks (89) mit einem geringen oder sanften Haftgrad befestigt ist.

3. Kapsel (1) nach Anspruch 2, die mehrere radiale Nuten (363', 363") umfasst, die gleichmäßig an dem Rand (360) der Basis (33) verteilt sind.

4. Kapsel (1) nach einem der vorhergehenden Ansprüche, wobei einige der Reliefs mehrere Sektoren (350) auf der oberen Fläche, auf der die Scheibe (5) aufliegt, definieren.

5. Kapsel (1) nach Anspruch 4, wobei die Sektoren (350) mehrere Vertiefungen (351) definieren, die geeignet sind, um die Verformung der Scheibe (5) aufzunehmen, ohne sie zu behindern, wenn der durch das Fluid im Inneren der Kapsel (1) ausgeübte Druck den Öffnungsschwellwert erreicht.

6. Kapsel (1) nach einem der vorhergehenden Ansprüche, wobei wenigstens eines der Reliefs einen Labyrinthabschnitt (320, 330, 340) definiert, der mit einer Vielzahl von Nuten (321, 331, 341) für die Freigabe des Brühgetränks versehen ist, und wobei die Basis (33) ein Labyrinth (30) umfasst, das durch wenigstens zwei Labyrinthabschnitte (320, 330, 340) definiert wird, auf denen die Scheibe (5) befestigt ist.

7. Kapsel (1) nach einem der vorhergehenden Ansprüche, wobei die Scheibe (5) eine dünne Schicht aus Aluminium oder einer Kunststoff-/Aluminiumzusammensetzung oder eine einzelne Schicht oder mehrschichtiger Kunststoff ist und eine Dicke zwischen 25 µm und 45 µm hat.

8. Kapsel (1) nach einem der vorhergehenden Ansprüche, wobei der Becher (2) im Inneren eine Trennwand (13) umfasst, die geeignet ist, um eine Teilkammer (12') für den Einschluss der Substanz (11), die aufgebrüht werden soll, zu definieren.

9. Kapsel (1) nach einem der vorhergehenden Ansprüche, wobei der Deckel (6), der auf einem Rand (4) befestigt ist, geeignet ist, eine Eingangsöffnung (21) der Kapsel (1) zu schließen, um eine Kammer (12) zu definieren, die oben durch den Deckel (6) und unten durch die Scheibe (5) hermetisch geschlossen ist, die die Substanz (11) enthält, die aufgebrüht oder gelöst werden soll.

10. Verfahren zur Zubereitung eines Brühgetränks aus einer Kapsel (1) nach Anspruch 9, wobei ein unter Druck gesetztes Fluid eingeführt wird, **dadurch gekennzeichnet, dass**, wenn der durch das Fluid im Inneren der Kammer (12, 12') ausgeübte Druck einen gewissen Schwellwertpegel erreicht, die Öffnung der Kapsel (1), um die Freigabe des Brühgetränks zuzulassen, durch das wenigstens teilweise Trennen oder Lösen der Schiebe (5) von der Basis (33) und durch die wenigstens teilweise Verformung der Scheibe (5) bestimmt wird.

11. Verfahren zur Zubereitung eines Brühgetränks nach Anspruch 10, wobei das Lösen der Scheibe (5) an einem Außenrand (360) der Basis (33) oder einer Seitenwand (380) über der Basis (33) stattfindet, um die Dichtungswirkung, die vorher durch die Scheibe (5) sichergestellt wurde, zu verhindern.

12. Verfahren zur Zubereitung eines Brühgetränks nach Anspruch 10 oder 11, wobei die Verformung der Scheibe (5) auf einem Rand (51) der Scheibe (5) stattfindet, die wenigstens an einer Vertiefung (351) eine Falte (52) bildet, die geeignet ist, um die Freigabe des Brühgetränks zuzulassen.

13. Verfahren zum Schweißen einer Dichtungsscheibe (5) an die Basis (33) einer Kapsel (1) nach einem der Ansprüche von 1 bis 9, wobei die Scheibe (5) unter Verwendung eines Schweißlacks (89) mit einem geringen Haftgrad wenigstens teilweise in einer lösbaren Weise an einen Außenrand (360) der Basis (33) oder an eine Seitenwand (380) über der Basis (33) geschweißt wird.

14. Schweißverfahren nach Anspruch 13, wobei die Scheibe (5) auch auf die Labyrinthabschnitte (320, 330, 340) der Basis (33), die ein Labyrinth (30) definieren, geschweißt wird.

## Revendications

1. Capsule (1) pour la préparation de boissons infusées ou solubles, comprenant :
- une coupelle (2) apte à définir un volume interne (V) destiné à contenir au moins une substance (11) à infuser ou à dissoudre, ladite coupelle (2) étant fermée sur le dessus par un couvercle (6), la coupelle (2) étant pourvue en outre d'un fond (3) muni d'une ouverture (31) apte à permettre la libération de la boisson infusée, et d'une base (33) pourvue d'une pluralité de reliefs (310, 320, 330, 340, 350, 360) ayant une surface supérieure dépourvue d'éléments de coupe ou de perforation,
dans laquelle la capsule (1) comprend un disque (5), placé à l'intérieur de la coupelle (2), **caractérisée en ce que** le disque (5) est apte à réaliser l'étanchéité de la capsule (1) par le dessous, soudé ou collé au moins partiellement à la base (33), d'une manière partiellement amovible afin de pouvoir être détaché ou décollé au moins partiellement par suite d'une augmentation de pression d'un fluide à l'intérieur de la capsule (1),
et **en ce que** l'ouverture de la capsule (1) pour la libération de la boisson infusée se produit par suite de la déformation du disque (5) par la pression exercée par le fluide à l'intérieur de la capsule (1).

2. Capsule (1) selon la revendication 1, dans laquelle le disque (5) est attaché d'une manière partiellement amovible sur un bord externe (360) défini par l'un des reliefs, ou sur une paroi latérale (380) juste au-dessus de la base (33), au moyen d'une laque (89) dotée d'un niveau d'adhérence faible ou modéré.

3. Capsule (1) selon la revendication 2, comprenant une pluralité de rainures radiales (363', 363") réparties de façon uniforme sur le bord (360) de la base (33).

4. Capsule (1) selon l'une quelconque des revendications précédentes, dans laquelle une partie des reliefs définissent une pluralité de secteurs (350) sur la surface supérieure desquels repose le disque (5).

5. Capsule (1) selon la revendication 4, dans laquelle les secteurs (350) définissent une pluralité de creux (351) aptes à loger, sans la bloquer, la déformation du disque (5) lorsque la pression exercée par le fluide à l'intérieur de la capsule (1) atteint le seuil d'ouverture.

6. Capsule (1) selon l'une quelconque des revendications précédentes, dans laquelle au moins un des reliefs définit une partie de labyrinthe (320, 330, 340) pourvue d'une pluralité de rainures (321, 331, 341) pour la libération de la boisson infusée, et dans laquelle la base (33) comprend un labyrinthe (30) défini par au moins deux parties de labyrinthe (320, 330, 340), sur lequel le disque (5) est fixé.

7. Capsule (1) selon l'une quelconque des revendications précédentes, dans laquelle le disque (5) est une pellicule d'aluminium ou d'un composé de matière plastique et d'aluminium ou d'une matière plastique monocouche ou multicouche qui présente une épaisseur comprise entre 25 µ et 45 µ.

8. Capsule (1) selon l'une quelconque des revendications précédentes, dans laquelle la coupelle (2) comprend, à l'intérieur, une paroi de séparation (13) apte à définir une chambre auxiliaire (12') destinée à contenir la substance (11) à infuser.

9. Capsule (1) selon l'une quelconque des revendications précédentes, dans laquelle le couvercle (6), fixé sur un bord (4), est apte à fermer une ouverture d'entrée (21) de la capsule (1) de manière à définir une chambre (12) hermétiquement fermée du dessus par le couvercle (6) et du dessous par le disque (5), contenant la substance (11) à infuser ou à dissoudre.

10. Procédé de préparation d'une boisson infusée à partir d'une capsule (1) selon la revendication 9, dans lequel un fluide sous pression est introduit, **caractérisé en ce que** lorsque la pression exercée par le fluide à l'intérieur de la chambre (12, 12') atteint un certain niveau seuil, l'ouverture de la capsule (1) pour permettre la libération de la boisson infusée est déterminée par le détachement ou le décollement au moins partiel du disque (5) de la base (33) et par la déformation au moins partielle dudit disque (5).

11. Procédé de préparation d'une boisson infusée selon la revendication 10, dans lequel le décollement du disque (5) se produit au niveau d'un bord externe (360) de la base (33) ou d'une paroi latérale (380) au-dessus de la base (33) de manière à annuler l'effet d'étanchéité précédemment garanti par le disque (5).

12. Procédé de préparation d'une boisson infusée, selon les revendications 10 ou 11, dans lequel la déformation du disque (5) se produit sur un bord (51) du disque (5) qui forme, au moins au niveau d'un creux (351), un pli (52) apte à permettre la libération de la boisson infusée.

13. Procédé de soudage d'un disque d'étanchéité (5) à la base (33) d'une capsule (1) selon l'une quelconque des revendications 1 à 9, dans lequel le disque (5) est soudé au moins partiellement d'une manière amovible à un bord externe (360) de la base (33) ou à une paroi latérale (380) au-dessus de la base (33) au moyen d'une laque de soudage (89) à faible niveau d'adhérence.

14. Procédé de soudage selon la revendication 13, dans lequel le disque (5) est également soudé sur des parties de labyrinthe (320, 330, 340) de la base (33) qui définissent un labyrinthe (30).
